# EUROPEAN PATENT APPLICATION

(11) **EP 4 542 201 A1**
(43) Date of publication of application: **23.04.2025**
(21) Application number: 22947697.3
(22) Date of filing: 10.11.2022
(51) Int. Cl.: G01N 21/01, G01N 21/03, G01N 21/17

(54) **PHOTOACOUSTIC CELL FOR PHOTOACOUSTIC SPECTROSCOPY DETECTION**

(30) Priority: 20.06.2022 CN 202210699659
(71) Applicant: Electric Power Research Institute. China Southern Power Grid, Guangzhou, Guangdong 510663 (CN); Maintenance & Test Centre, CSG EHV Power Transmission Company, Guangzhou, Guangdong 510700 (CN)
(72) Inventor: LIAO, Jianping, Guangzhou, Guangdong 510663 (CN); PU, Jinyu, Guangzhou, Guangdong 510663 (CN); GAO, Fan, Guangzhou, Guangdong 510663 (CN); YANG, Weihong, Guangzhou, Guangdong 510663 (CN); CHEN, Yufei, Guangzhou, Guangdong 510663 (CN); GAO, Meng, Guangzhou, Guangdong 510663 (CN); XU, Yongye, Guangzhou, Guangdong 510663 (CN); CHENG, Chuanhui, Guangzhou, Guangdong 510663 (CN)
(74) Representative: Isarpatent
(86) International application number: PCT/CN2022/131050
(87) International publication number: WO 2023/245961

(57) **Abstract**

A photoacoustic cell for photoacoustic spectroscopy detection. A resonant chamber (3) is transversely provided at the tops of a first buffer chamber (1) and a second buffer chamber (7) which are vertically arranged in parallel, and the interiors of the resonant chamber (3), the first buffer chamber (1), and the second buffer chamber (7) are communicated, so that the resonant chamber (3) and the two buffer chambers form a Π-shaped structure; when infrared light passes through a first optical window piece (2) and a second optical window piece (8), the first optical window piece (2) and the second optical window piece (8) can generate a light scattering phenomenon to cause noise; because an included angle of 45° is formed between the first optical window piece (2) and a horizontal direction, and an included angle of 135° is formed between the second optical window piece (8) and the horizontal direction, reflected light can be as perpendicular as possible to the resonant chamber (3) to enter the first buffer chamber (1) and the second buffer chamber (7), thereby greatly reducing the window noise, improving the detection sensitivity, and solving the technical problem that the sensitivity of photoacoustic spectroscopy detection of a trace gas is reduced due to relatively large noise signals at windows of existing photoacoustic cells.

## Description

The present application claims the priority to Chinese Patent Application No. 202210699659.5, titled "PHOTOACOUSTIC CELL FOR PHOTOACOUSTIC SPECTROSCOPY DETECTION", filed with the China National Intellectual Property Administration on June 20, 2022, the entire disclosure of which is incorporated herein by reference.

### FIELD

The present application relates to the technical field of photoacoustic spectroscopy detection, and in particular to a photoacoustic cell for photoacoustic spectroscopy detection.

### BACKGROUND

Photoacoustic spectroscopy technology is a matter-based spectroscopy technology. When a matter is irradiated with a light beam or a pulsed beam, an acoustic signal is generated through the photoacoustic effect with intensity being proportional to the light absorption coefficient of the irradiated matter. During detection of a gas to be detected, the concentration of the gas to be detected can be indirectly obtained by detecting the acoustic signal produced when the gas to be detected absorbs the light. A photoacoustic cell is a place in a photoacoustic spectroscopy detection system at which the gas reacts to the light, and thus the performance of the photoacoustic cell has a considerable impact on the detection capability. During detection of a trace gas, the optical signal is weak, and is usually buried in a noise signal. Therefore, it is desired to reduce the impact of the noise on the photoacoustic spectroscopy gas detection, so as to improve the sensitivity of detection of the trace gas.

### SUMMARY

A photoacoustic cell for photoacoustic spectroscopy detection is provided according to the present application, to solve the technical problem of low sensitivity of photoacoustic spectroscopy detection of a trace gas caused by a relatively strong noise signal at a window of a conventional photoacoustic cell.

In view of this, a photoacoustic cell for photoacoustic spectroscopy detection is provided according to the present application, including a first buffer chamber, a second buffer chamber, a resonant cavity, a first optical window, a second optical window, and a microphone.

The resonant cavity is horizontally arranged at top portions of the first buffer chamber and the second buffer chamber that are vertically arranged in parallel, and interiors of the resonant cavity, the first buffer chamber and the second buffer chamber are communicated.

A first window opening for mounting the first optical window at an angle of 45° relative to a horizontal direction is provided at a top portion of a left end of the resonant cavity, and a second window opening for mounting the second optical window at an angle of 135° relative to the horizontal direction is provided at a top portion of a right end of the resonant cavity.

The microphone is mounted at the middle of a bottom portion of the resonant cavity.

The first buffer chamber is provided with a gas inlet, and the second buffer chamber is provided with a gas outlet.

Optionally, the first optical window and the second optical window are CaF2 lenses.

Optionally, the microphone is a condenser microphone.

Optionally, each of the first buffer chamber, the second buffer chamber and the resonant cavity is of a cylindrical cavity structure.

Optionally, a radius of the resonant cavity is 3 mm, and a length of the resonant cavity is 120 mm.

Optionally, a radius of each of the first buffer chamber and the second buffer chamber is 35 mm, and a length of each of the first buffer chamber and the second buffer chamber is 60 mm.

Optionally, the first buffer chamber, the second buffer chamber and the resonant cavity are made of copper.

Optionally, a radius of each of the first optical window and the second optical window is smaller than the radius of the resonant cavity, and a thickness of each of the first optical window and the second optical window is 2 mm.

It can be seen from the above technical solutions that, the photoacoustic cell for photoacoustic spectroscopy detection according to the present application has the following advantages.

In the photoacoustic cell for photoacoustic spectroscopy detection provided in the present application, the resonant cavity is horizontally arranged at the top portions of the first buffer chamber and the second buffer chamber that are vertically arranged in parallel, and the interiors of the resonant cavity, the first buffer chamber and the second buffer chamber are communicated. Hence, the resonant cavity and the two buffer chambers form a Π-shaped structure. When infrared light passes through the first optical window and the second optical window, light scattering occurs at the first optical window and the second optical window, which produces noises. Since the first optical window and the second optical window are angled respectively by 45° and by 135° relative to the horizontal direction, reflected lights can enter the first buffer chamber and the second buffer chamber substantially perpendicular to the resonant cavity respectively, thereby significantly reducing the noises at the windows and improving the detection sensitivity. In this way, the technical problem of low sensitivity of photoacoustic spectroscopy detection of the trace gas caused by the relatively strong noise signal at the window of the conventional photoacoustic cell can be solved.

### BRIEF DESCRIPTION OF THE DRAWINGS

For more clearly illustrating the technical solutions in the embodiments of the present application or in the conventional technology, drawings referred to describe the embodiments or the conventional technology will be briefly introduced hereinafter. Apparently, the drawings in the following description are only some examples of the present application, and for those skilled in the art, other drawings may be obtained based on these drawings without any creative efforts.

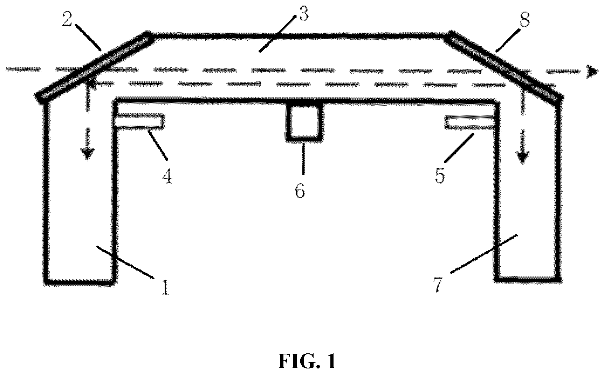

FIG. 1 is a schematic view showing the structure of a photoacoustic cell for photoacoustic spectroscopy detection according to the present application.

**Reference numerals:**

| | | | |
|---|---|---|---|
| 1 | first buffer chamber, | 2 | first optical window, |
| 3 | resonant cavity, | 4 | gas inlet, |
| 5 | gas outlet, | 6 | microphone, |
| 7 | second buffer chamber, | 8 | second optical window. |

### DETAILED DESCRIPTION OF THE EMBODIMENTS

Technical solutions according to the embodiments of the present application will be described clearly and completely as follows in conjunction with the accompany drawings in the embodiments of the present application, so that the technical solutions of the present application are better understood by those skilled in the art. It is obvious that the described embodiments are merely a part of the embodiments according to the present application, rather than all of the embodiments. All the other embodiments obtained by those skilled in the art based on the embodiments in the present application without any creative work belong to the scope of protection of the present application.

For understanding, Reference may be made to FIG. 1. An embodiment of a photoacoustic cell for photoacoustic spectroscopy detection is provided according to the present application, including a first buffer chamber 1, a second buffer chamber 7, a resonant cavity 3, a first optical window 2, a second optical window 8, and a microphone 6.

The resonant cavity 3 is horizontally arranged at the top portions of the first buffer chamber 1 and the second buffer chamber 7. The first buffer chamber 1 and the second buffer chamber 7 are vertically arranged in parallel. The interiors of the resonant cavity 3, the first buffer chamber 1 and the second buffer chamber 7 are communicated.

A first window opening is provided at a top portion of a left end of the resonant cavity 3 to mount the first optical window 2 being at an angle of 45° relative to a horizontal direction, and a second window opening is provided at a top portion of a right end of the resonant cavity 3 to mount the second optical window 8 being at an angle of 135° relative to the horizontal direction.

The microphone 6 is mounted at the middle of a bottom portion of the resonant cavity 3.

The first buffer chamber 1 is provided with a gas inlet 4, and the second buffer chamber 7 is provided with a gas outlet 5.

It should be noted that, in the photoacoustic cell for photoacoustic spectroscopy detection provided in the present application, the resonant cavity 3 is horizontally arranged at the top portions of the first buffer chamber 1 and the second buffer chamber 7 that are vertically arranged in parallel, and the interiors of the resonant cavity 3, the first buffer chamber 1 and the second buffer chamber 7 are communicated. Hence, the resonant cavity 3 and the two buffer chambers form a Π-shaped structure. A standing wave of the acoustic wave is present at the middle position of the bottom portion of the resonant cavity 3. The microphone 6 is arranged at the middle position of the bottom portion of the resonant cavity 3, so as to obtain the maximal acoustic signal to ensure accurate detection results. When infrared light passes through the first optical window 2 and the second optical window 8, light scattering occurs at the first optical window 2 and the second optical window 8, which produces noises. Since the first optical window 2 and the second optical window 8 are at angles of 45° and 135° respectively relative to the horizontal direction, reflected lights can enter the first buffer chamber 1 and the second buffer chamber 7 substantially perpendicular to the resonant cavity 3, thereby significantly reducing noises at the windows and improving the detection sensitivity. In this way, the technical problem of low sensitivity of photoacoustic spectroscopy detection of a trace gas caused by a relatively strong noise signal at a window of a conventional photoacoustic cell can be solved.

In an embodiment, the first optical window 2 and the second optical window 8 are CaF2 lenses.

In an embodiment, the microphone 6 is a condenser microphone 6. The condenser microphone 6 has a high detection precision, which is beneficial to improving the sensitivity of photoacoustic spectroscopy detection of the trace gas.

In an embodiment, each of the first buffer chamber 1, the second buffer chamber 7 and the resonant cavity 3 is of a cylindrical cavity structure.

In an embodiment, a radius of the resonant cavity 3 is 3 mm, and a length of the resonant cavity 3 is 120 mm.

A radius of each of the first buffer chamber 1 and the second buffer chamber 7 is 35 mm, and a length of each of the first buffer chamber 1 and the second buffer chamber 7 is 60 mm.

In an embodiment, the first buffer chamber 1, the second buffer chamber 7 and the resonant cavity 3 are made of copper.

In an embodiment, a radius of each of the first optical window 2 and the second optical window 8 is smaller than the radius of the resonant cavity 3, and a thickness of each of the first optical window 2 and the second optical window 8 is 2 mm.

In the present application, to ensure better distribution of the acoustic field, the length and the radius of the resonant cavity 3 are 120 mm and 3 mm respectively. The length of each of the first buffer chamber 1 and the second buffer chamber 7 is 60 mm, and the radius thereof is 35 mm. The radius of each of the first optical window 2 and the second optical window 8 is smaller than the radius of the resonant cavity 3, and the thickness thereof is 2 mm. With such design, the standing wave in the acoustic field is exactly located at the middle position, where the value of response signal is larger, and accordingly, the signal-to-noise ratio is larger. Each of cavity bodies of the first buffer chamber 1, the second buffer chamber 7 and the resonant cavity 3 is made of copper, which has a relatively small adsorption of gas, thereby avoiding the interference brought by a residual gas that is adsorbed during multiple detections.

The above embodiments are only for describing instead of limiting the technical solutions of the present application. Although the present application has been described in detail with reference to the above embodiments, it shall be understood by those skilled in the art that the technical solutions described in the above embodiments may be modified or some technical features thereof may be substituted by equivalents, and such modifications and substitutions will not make the corresponding technical solutions deviate from the spirit and scope of the technical solutions of the embodiments of the present application.

## Claims

1. A photoacoustic cell for photoacoustic spectroscopy detection, comprising a first buffer chamber, a second buffer chamber, a resonant cavity, a first optical window, a second optical window, and a microphone, wherein
the resonant cavity is horizontally arranged at top portions of the first buffer chamber and the second buffer chamber that are vertically arranged in parallel, and interiors of the resonant cavity, the first buffer chamber and the second buffer chamber are communicated;
a first window opening is provided at a top portion of a left end of the resonant cavity and configured to mount the first optical window being at an angle of 45° relative to a horizontal direction, and a second window opening is provided at a top portion of a right end of the resonant cavity and configured to mount the second optical window being at an angle of 135° relative to the horizontal direction;
the microphone is mounted at the middle of a bottom portion of the resonant cavity; and
the first buffer chamber is provided with a gas inlet, and the second buffer chamber is provided with a gas outlet.

2. The photoacoustic cell for photoacoustic spectroscopy detection according to claim 1, wherein the first optical window and the second optical window are CaF2 lenses.

3. The photoacoustic cell for photoacoustic spectroscopy detection according to claim 1, wherein the microphone is a condenser microphone.

4. The photoacoustic cell for photoacoustic spectroscopy detection according to claim 1, wherein each of the first buffer chamber, the second buffer chamber and the resonant cavity is of a cylindrical cavity structure.

5. The photoacoustic cell for photoacoustic spectroscopy detection according to claim 4, wherein the resonant cavity has a radius of 3 mm, and a length of 120 mm.

6. The photoacoustic cell for photoacoustic spectroscopy detection according to claim 5, wherein each of the first buffer chamber and the second buffer chamber has a radius of 35 mm, and a length of 60 mm.

7. The photoacoustic cell for photoacoustic spectroscopy detection according to claim 6, wherein the first buffer chamber, the second buffer chamber and the resonant cavity are made of copper.

8. The photoacoustic cell for photoacoustic spectroscopy detection according to claim 7, wherein each of the first optical window and the second optical window has a radius smaller than the radius of the resonant cavity, and a thickness of 2 mm.
